# EUROPEAN PATENT APPLICATION

(11) **EP 2 026 338 A1**
(43) Date of publication of application: **18.02.2009**
(21) Application number: 08161901.7
(22) Date of filing: 06.08.2008
(51) Int. Cl.: G11B 5/86

(54) **Apparatus and method for manufacturing magnetic recording medium**

(30) Priority: 07.08.2007 JP 2007205914
(71) Applicant: Fujifilm Corporation, Tokyo 106-8620 (JP)
(72) Inventor: Nishikawa, Masakazu, Kanagawa (JP); Yasunaga, Tadashi, Kanagawa (JP); Nishida, Yoichi, Kanagawa (JP)
(74) Representative: HOFFMANN EITLE

(57) **Abstract**

The present invention provides an apparatus for manufacturing a magnetic recording medium including, a mold structure formed of a disc-shaped substrate having on a surface thereof a concavo-convex pattern having convex portions which correspond to a servo area and a data area of a magnetic recording medium; and an imprinting and magnetic field applying unit which transfers a concavo-convex pattern on the basis of the concavo-convex pattern of the mold structure into an imprint resist layer that is made of an imprint resist composition and that is formed on a magnetic layer of a magnetic recording medium base by pressing the mold structure against the imprint resist layer, and which transfers magnetism to the servo area by application of a magnetic field via the mold structure.

## Description

### BACKGROUND OF THE INVENTION

### Field of the Invention

The present invention relates to an apparatus and a method for manufacturing a magnetic recording medium, in which a magnetic recording medium having a servo area and a data area is manufactured using a mold structure having a plurality of convex portions.

### Description of the Related Art

In recent years, attempts have been made to manufacture a magnetic recording medium having an increased recording density and, in place of conventional magnetic recording media having a continuous magnetic layer, there are proposed DTM (discrete track media) and BPM (bit patterned media) having a patterned magnetic layer (see, for example, Japanese Patent Application Laid-Open (JP-A) No. 09-97419 and JP-A No.2006-120299). Formation of the patterned magnetic layer requires a mask layer having a desired pattern. One proposed method for forming the mask layer employs nanoimprint lithography (NIL). Specifically, this method includes coating a resist onto an object to be processed; and pressing a mold, which has been formed by processing a base so as to have a desired pattern, against the resist-coated object to thereby form a desired resist pattern.

As described above, in nanoimprint lithography (NIL) employed for manufacturing a magnetic recording medium, a patterned mold, which has been formed through a patterning process, is pressed against a coated resist. Therefore, the pattern of the mold mainly has a concentric concavo-convex pattern for forming a data area and a concave-convex pattern for forming a servo area. A concavo-convex pattern formed in the servo area contributes to management of address information for recording signals, and thus, is formed so that different servo areas have different concavo-convex patterns. Therefore, the pattern of the mold is different between the data area and the servo area in cross-section area, depth or the like, causing undesired variation in pressure applied to the coated resist. As a result, a resist pattern formed after being pressed by the patterned mold may be different from an intended pattern. Specifically, the thickness of a resist remaining after pressing (resist residue) of convex portions of the patterned mold against the coated resist is uneven between the data area and the servo area, and furthermore, the thickness is uneven between internal structures of the servo area, resulting in forming an uneven mask pattern. Formation of the uneven mask pattern leads to uneven patterning of a magnetic layer, failing to manufacture DTM and BPM having desired properties.

As described above, difficulty is encountered in successfully carrying out nanoimprint lithography (NIL) both in the servo area and in the data area.

Furthermore, signals in the servo area are sensing signals, which are different from those in the data area. Therefore, it is difficult to use an advanced signal processing method, and there is a need to ensure desired signal integrity (i.e., desired signal-to-noise (S/N) ratio) for each signal. However, in the servo area, information (signals) is recorded on the basis of the presence or absence (1/0) of a magnetic layer, and thus, the S/N ratio is reduced by half (- 6 dB) as compared to a conventional method, resulting in deterioration of servo accuracy and causing a great obstacle to increase a recording density.

Particularly in DTM, information is recorded on the basis of the presence or absence (1/0) of a magnetic layer in the servo area, whereas, in the data area, information is recorded using two magnetizations (1/ -1) established in opposite directions to each other in the magnetic layer. Thus, the difference in signal amplitude between the servo area and the data area, which is caused by the difference in information recording between these areas, is corrected by signal processing (see, for example, JP-A No. 2006-65918).

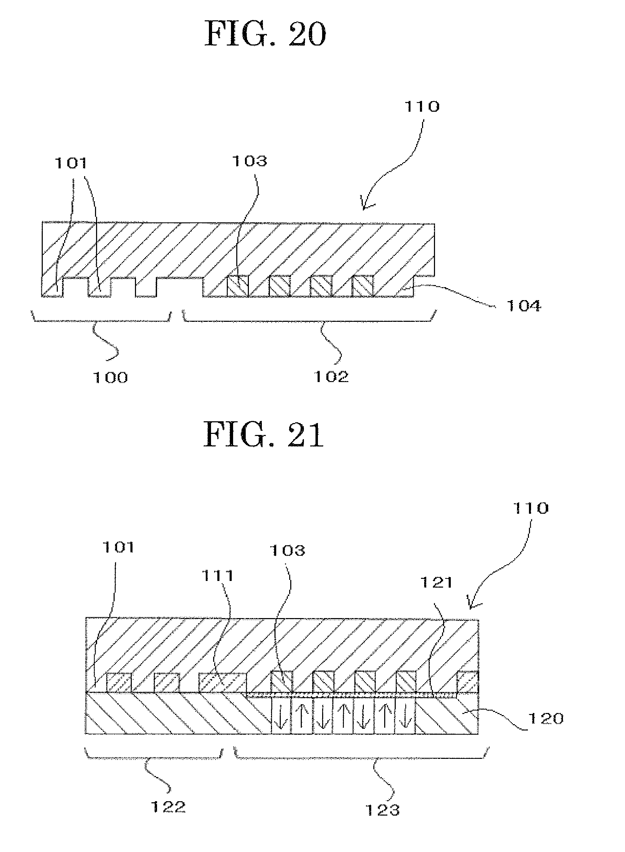

Some prior arts (e.g., JP-A No. 2006-216200) are based on a technical idea that servo signals are recorded in the servo area by a magnetic transfer method in order to maintain a desired signal-to-noise ratio (S/N ratio) of each servo signal. JP-A No. 2006-216200 disclosed a magnetic recording medium which is manufactured using a metal mold 110 (see FIG.20) having convex portions 101 in an area 100 corresponding to a data area (indicated by reference numeral 122 in FIG.21) and having a large flat convex portion 104 having an embedded magnetic layer 103 in an area 102 corresponding to a servo area (indicated by reference numeral 123 in FIG.21). However, in this disclosed technique, when the metal mold 1.10 is pressed against a resist 111 coated on a magnetic recording medium 120, an excessive amount of a resist residue 121 remains between the large flat convex portion 104 and the magnetic recording medium 120, and thus, the distance between the large flat convex portion 104 of the metal mold 110 and the magnetic recording medium 120 cannot be reduced, making it difficult to realize a desired state for transferring magnetism. From various studies on magnetic transfer techniques for many years, there has been reached such a conclusion, based on a magnetic transfer principle, that in order to realize a desired state for transferring magnetism, a gap between a master disc and a slave disc is required to be controlled on the order of several tens nanometers over the entire surface of these discs.

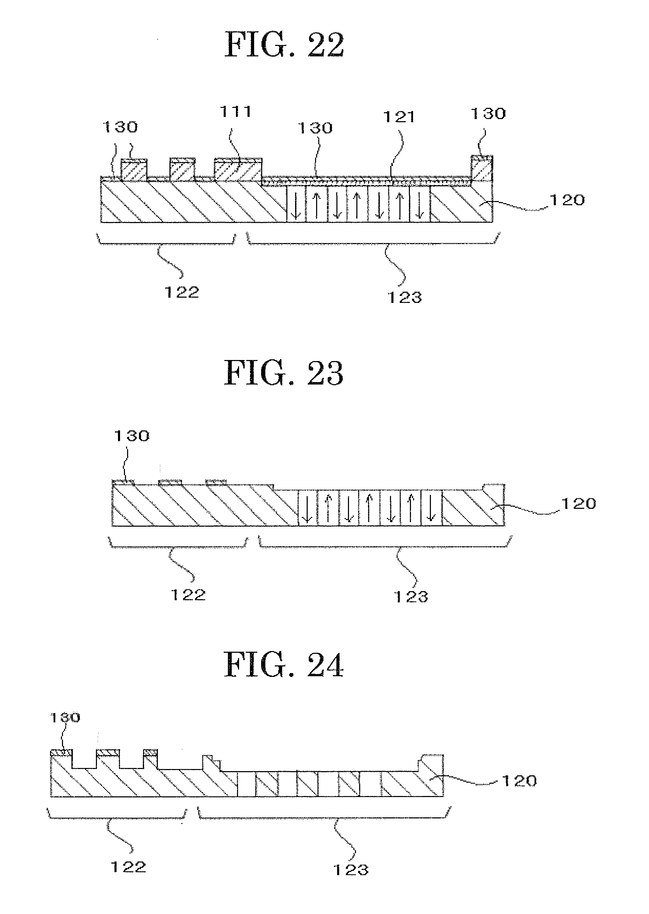

The method disclosed in JP-A No. 2006-216200 includes, for patterning a data area 122 and a servo area 123, a metal film coating step for forming a metal film 130 in the data area 122 and the servo area 123 (see FIG.22); a liftoff step (see FIG.23); and an etching step carried out after removal of the resist residue 121 and the metal film 130 from these areas. The cross-section area of a pattern formed in the servo area 123 is larger than that of a pattern formed in the data area 122, and thus, the amount of the resist residue 121 in the servo area 123 is greater than in the data area 122. As a result, the metal film in the servo area 123, which must remain after the liftoff step, is removed (see FIG.23). In this state, portions of a magnetic layer corresponding to the servo area 123 is undesirably etched (see FIG.24), causing deterioration in properties of a magnetic layer of the servo area 123 (degradation of signal integrity due to reduction of film thickness). In addition, since a slight difference in height is formed between the data area 122 and the servo area 123 by etching (FIG.24), turbulent air flow is generated when the head of a disc drive moves above the servo area 123, making flying of the head unstable. Therefore, there are various concerns about serious damage given to the disc drive.

JP-A No. 2006-216200 does not disclose or suggest an apparatus and a method for manufacturing a magnetic recording medium having a servo area and a data area, the method employing a mold structure having a plurality of convex portions, wherein a magnetic transfer process and a nanoimprint process are efficiently carried out at one time for recording servo signals and for forming a concavo-convex pattern in a data area.

### BRIEF SUMMARY OF THE INVENTION

An object of the present invention is to provide an apparatus and a method for manufacturing a magnetic recording medium, which realize a reliable and efficient manufacturing of a next-generation magnetic recording medium having excellent signal integrity in a servo area, and which carry out, by an imprinting and magnetic field applying unit, magnetism transfer for recording servo signals for a magnetic recording medium and nanoimprinting for efficiently forming a concavo-convex pattern in a data area.

Accordingly, the present invention provides the following in order to solve the above-described problems.
<1> An apparatus for manufacturing a magnetic recording medium, including a mold structure formed of a disc-shaped substrate having on a surface thereof a concavo-convex pattern having convex portions which correspond to a servo area and a data area of a magnetic recording medium; and an imprinting and magnetic field applying unit which transfers a concavo-convex pattern on the basis of the concavo-convex pattern of the mold structure into an imprint resist layer that is made of an imprint resist composition and that is formed on a magnetic layer of a magnetic recording medium base by pressing the mold structure against the imprint resist layer, and which transfers magnetism to the servo area by application of a magnetic field via the mold structure.
<2> The apparatus for manufacturing a magnetic recording medium according to <1> above, wherein the magnetic field is applied to the servo area and the data area via the mold structure.
<3> The apparatus for manufacturing a magnetic recording medium according to <2> above, wherein the magnetic field is applied to the servo area and the data area via the mold structure in a direction perpendicular to a surface of the magnetic recording medium.
<4> The apparatus for manufacturing a magnetic recording medium according to any one of <1> to <3> above, wherein the apparatus further includes a unit to be configured to form a resist layer in a data area (data-area resist layer forming unit) which forms the imprint resist layer made of the imprint resist composition only on the data area of the magnetic recording medium.
<5> The apparatus for manufacturing a magnetic recording medium according to any one of <1> to <4> above, wherein the apparatus further includes a protective layer-forming unit which forms a protective layer in the servo area of the magnetic recording medium which servo area has undergone magnetism transfer.
<6> The apparatus for manufacturing a magnetic recording medium according to any one of <1> to <5> above, wherein the apparatus further includes a heating unit for heating the imprint resist layer which is made of the imprint resist composition and which is formed on the magnetic layer of the magnetic recording medium base; and a cooling unit for cooling an imprint resist layer formed after the mold structure is pressed against a heated imprint resist layer.
<7> The apparatus for manufacturing a magnetic recording medium according to <6> above, wherein the heating unit heats the imprint resist layer to a temperature equal to or higher than a glass transition temperature of a thermoplastic resin contained in the imprint resist composition.
<8> The apparatus for manufacturing a magnetic recording medium according to any one of <1> to <5> above, wherein the apparatus further includes a light-irradiating unit for curing an imprint resist composition by light irradiation which is formed after the mold structure is pressed against the imprint resist composition coated on the magnetic layer of the magnetic recording medium base.
<9> The apparatus for manufacturing a magnetic recording medium according to <8> above, wherein the imprint resist composition contains a photo-curable resin.
<10> A method for manufacturing a magnetic recording medium, including an imprinting and magnetic field applying step which uses a mold structure formed of a disc-shaped substrate having on a surface thereof a concavo-convex pattern having convex portions which correspond to a servo area and a data area of a magnetic recording medium; which transfers a concavo-convex pattern on the basis of the concavo-convex pattern of the mold structure into an imprint resist layer that is made of an imprint resist composition and that is formed on a magnetic layer of a magnetic recording medium base by pressing the mold structure against the imprint resist layer; and which transfers magnetism to the servo area by application of a magnetic field via the mold structure.

The present invention can solve the above-described problems, and can provide an apparatus and a method for manufacturing a magnetic recording medium, which realize a reliable and efficient manufacturing of a next-generation magnetic recording medium having excellent signal integrity in a servo area, and which carry out, by an imprinting and magnetic field applying unit, magnetism transfer for recording servo signals for a magnetic recording medium and nanoimprinting for efficiently forming a concavo-convex pattern in a data area.

### BRIEF DESCRIPTION OF THE SEVERAL VIEWS OF THE DRAWINGS

FIG.1 is a partial perspective view of a mold structure used in the present invention.
FIG.2A shows a step of producing a master plate for forming a mold structure, wherein a photoresist layer is formed on a master substrate.
FIG.2B shows a step of producing a master plate for forming a mold structure, wherein a photoresist layer is exposed to light so as to have a predetermined pattern.
FIG.2C shows a step of producing a master plate for forming a mold structure, wherein a photoresist layer is subjected to development.
FIG.2D shows a step of producing a master plate for forming a mold structure, wherein a master substrate is etched using a pattern of a resist layer 51 as a mask.
FIG.2E shows a step of producing a master plate for forming a mold structure, and shows a formed master plate having a concavo-convex pattern.
FIG.3A shows a step of producing a mold structure, wherein convex portions of a master plate are transferred to an imprint resist layer by pressing the master plate against the imprint resist layer formed on a substrate.
FIG.3B shows a step of producing a mold structure, wherein a transferred pattern is cured by applying heat to an imprint resist layer or by irradiating an imprint resist layer with ultraviolet rays.
FTG.3C shows a step of producing a mold structure, wherein etching is carried out using a transferred pattern as a mask.
FIG. 3D shows a step of producing a mold structure and shows a formed mold structure having a concavo-convex pattern.
FIG.4 shows an apparatus for manufacturing a magnetic recording medium of the present invention.
FIG.5 shows a pressing unit constituting an apparatus for manufacturing a magnetic recording medium of the present invention.
FIG.6 is a cross-sectional view of a step of a method for manufacturing a magnetic recording medium using an apparatus of the present invention.
FIG.7 is a cross-sectional view of a step of a method for manufacturing a magnetic recording medium using an apparatus of the present invention.
FIG.8 is a cross-sectional view of a step of a method for manufacturing a magnetic recording medium using an apparatus of the present invention.
FIG.9 is a cross-sectional view of a step of a method for manufacturing a magnetic recording medium using an apparatus of the present invention.
FIG.10 is a cross-sectional view of a step of a method for manufacturing a magnetic recording medium using an apparatus of the present invention.
FIG. 11 is a cross-sectional view of a step of a method for manufacturing a magnetic recording medium of the present invention.
FIG.12 is a cross-sectional view of a step of a method for manufacturing a magnetic recording medium using an apparatus of the present invention.
FIG.13 is a cross-sectional view of a step of a method for manufacturing a magnetic recording medium using an apparatus of the present invention.
FIG. 14 is a cross-sectional view of a step of a method for manufacturing a magnetic recording medium using an apparatus of the present invention.
FIG. 15 is a cross-sectional view of a step of a method for manufacturing a magnetic recording medium using an apparatus of the present invention.
FIG.16 is a cross-sectional view of a step of a method for manufacturing a magnetic recording medium using an apparatus of the present invention.
FIG.17 is a cross-sectional view of a step of a method for manufacturing a magnetic recording medium using an apparatus of the present invention.
FIG.18 is a cross-sectional view of a step of a method for manufacturing a magnetic recording medium of the present invention.
FIG.19 is a cross-sectional view of a step of a method for manufacturing a magnetic recording medium using an apparatus of the present invention.
FIG.20 is a cross-sectional view of a step of a conventional method for manufacturing a magnetic recording medium.
FIG.21 is a cross-sectional view of a step of a conventional method for manufacturing a magnetic recording medium.
FIG.22 is a cross-sectional view of a step of a conventional method for manufacturing a magnetic recording medium.
FIG.23 is a cross-sectional view of a step of a conventional method for manufacturing a magnetic recording medium.
FIG.24 is a cross-sectional view of a step of a conventional method for manufacturing a magnetic recording medium.

### DETAILED DESCRIPTION OF THE INVENTION

### (Apparatus and method for manufacturing a magnetic recording medium)

An apparatus for manufacturing a magnetic recording medium of the present invention includes at least a mold structure, and an imprinting and magnetic field applying unit and, if necessary, includes a data area-resist layer forming unit, a protective layer-forming unit, a heating unit, a cooling unit, a light-irradiating unit or other units.

A method for manufacturing a magnetic recording medium of the present invention includes at least an imprinting and magnetic field applying step using a mold structure and, if necessary, a step of forming a resist layer in a data area (data area-resist layer forming step), a protective layer-forming step, a heating step, a cooling step, a light-irradiating step or other steps.

The method of the present invention can be suitably carried out by the apparatus of the present invention. In this method, the imprinting and magnetic field applying step can be carried out by the imprinting and magnetic field applying unit; the data area-resist layer forming step can be carried out by the data area-resist layer forming unit; the protective layer-forming step can be carried out by the protective layer-forming unit; the heating step can be carried out by the heating unit; the cooling step can be carried out by the cooling unit; the light-irradiating step can be carried out by the light-irradiating unit; and the other steps can be carried out by the other units.

### <Mold structure>

The mold structure is formed of a disc-shaped substrate having on a surface thereof a concavo-convex pattern having convex portions which correspond to a servo area and a data area of a magnetic recording medium

The data area is provided with a generally concentric convex pattern, and serves as a data recording area.

The servo area is provided with a pattern of convex portions having different top surface areas.

The servo area corresponds to tracking servo control signals, and is mainly composed of a preamble pattern, a servo timing mark, an address pattern, a burst pattern or the like.

The preamble pattern generates reference clock signals for reading control signals from an address pattern region or the like.

The servo timing mark serves as trigger signals for reading the address pattern and the burst pattern.

The address pattern (mark) includes sector (angle) information and track (radius) information, and indicates the absolute position (address) of a disc.

The burst pattern has the function of finely adjusting the position of a magnetic head and thus attaining highly accurate positioning, when the magnetic head is in an on-track state.

The material for forming the mold structure is not particularly limited and can be appropriately selected according to the purpose, with any one of quartz, a metal and a resin being preferred.

Examples of the metal include Ni, Cu, Al, Mo, Co, Cr, Ta, Pd, Pt, Au and alloys thereof. Of these, Ni and Ni alloys are particularly preferred.

Examples of the resin include polyethylene terephthalate (PET), polyethylene naphthalate (PEN), polycarbonate (PC) and low glass transition temperature fluorine resins.

In the present invention, the mold structure serves as a mold structure employed for imprinting and as a master disc employed for magnetism transfer, and therefore, has a magnetic layer on the surface of the concavo-convex pattern.

The magnetic material for forming the magnetic layer is not particularly limited and can be appropriately selected according to the purpose. Examples of the magnetic material include Co, Co alloys (e.g., CoNi, CoNiZr and CoNbTaZr), Fe, Fe alloys (e.g., FeCo, FeCoNi, FeNiMo, FeAlSi, FeAl and FeTaN), Ni and Ni alloys (e.g., NiFe). Of these, FeCo and FeCoNi are particularly preferred.

The method for forming the magnetic layer is not particularly limited and can be appropriately selected according to the purpose. Examples of the method include a vacuum film-forming method such as vacuum vapor deposition, sputtering or ion plating; and a film-forming method such as a plating method or a coating method

The thickness of the magnetic layer is not particularly limited and can be appropriately selected according to the purpose. The thickness is preferably is 5 nm to 200 nm, more preferably 10 nm to 150 nm.

Preferably, the magnetic layer is provided thereon with a protective film such as a diamond-like carbon (DLC) film or a sputtered carbon film. Furthermore, a lubricant layer may be provided on the protective film. When these film and layer are provided on the magnetic layer, a DLC film (protective film) having a thickness of 3 nm to 30 nm is preferably formed with a lubricant layer. Alternatively, a firm-contact promoting layer (e.g., an Si layer) may be provided between the magnetic layer and the protective film. The lubricant layer has the effect of overcoming reduction in durability (e.g., generation of scratches), which would otherwise be caused by friction during correction of an offset occurring in the process of contacting a slave disc.

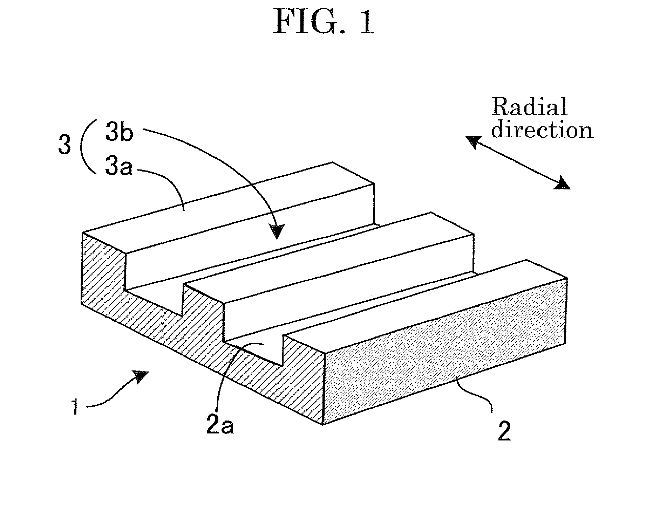

FIG.1 is a partial perspective view of the structure of a mold structure in an embodiment. Notably, the magnetic layer on the surface of the concavo-convex pattern is not shown.

As shown in FIG.1, the mold structure includes a disc-shaped substrate 2, and a plurality of convex portions 3 formed at predetermined intervals on one surface 2a of the substrate 2 (hereinafter the surface may be referred to as a "reference surface 2a"), and if necessary, further includes other convex and concave portions. Notably, at least the uppermost layer of the convex portions of the mold structure is required to be formed of a ferromagnetic material so that magnetism transfer can be carried out. Examples of the ferromagnetic material include a metal or an alloy containing at least one of Fe, Co, Ni, Cr, Ta, W, Pt, Ru and O. Alternatively, the substrate 2 itself, having convex and concave portions, may be formed of a ferromagnetic material. In order to control magnetic anisotropy of the magnetic layer, an undercoat layer may be provided therebelow. The surface of the mold structure 1 may be provided with a protective layer for ensuring its durability The protective layer is formed of a hard carbon material or a similar material, and the thickness of the layer is preferably about 2 nm to about 10 nm.

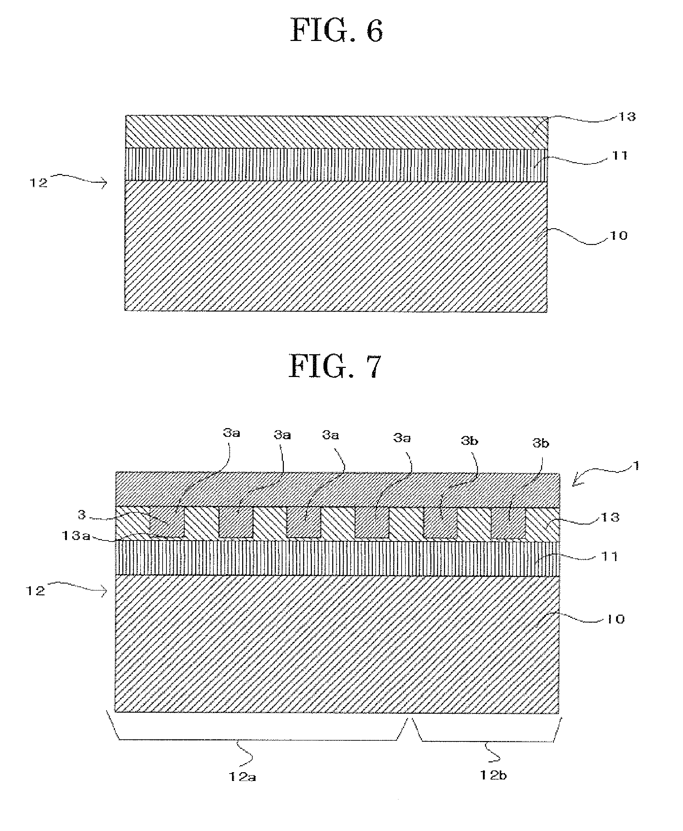

Notably, the aforementioned convex portions 3 include data-pattern convex portions 3a corresponding to a data area 12a (see FIG. 7) and servo-pattern convex portions 3b corresponding to a servo area 12b (see FIG. 7). In addition to the case of forming the data-pattern convex portions 3a, the servo-pattern convex portions 3b are provided in a pattern corresponding to servo signals which are intended to be recorded. When the mold structure 1 having such a pattern is employed, as compared with the case where the metal mold described in JP-A No. 2006-216200 is used, in nanoimprint lithography (NIL), the amount of a resist residue 13a present between the mold structure 1 and a magnetic recording medium base 12, especially the amount of a resist residue present in the servo area 123, can be reduced, realizing a state where the resist residue presents virtually evenly on the entire magnetic recording medium base 12.

Other members constituting the mold structure are not particularly limited, so long as they do not impair the effects of the present invention, and can be appropriately selected depending on the purpose. Examples of the other members include a mold surface layer which is formed on the substrate 2 and which has the function of facilitating the mold structure to be separated from an imprint resist layer 13.

Next will be described a method for manufacturing the mold structure.

### - Production of master plate -

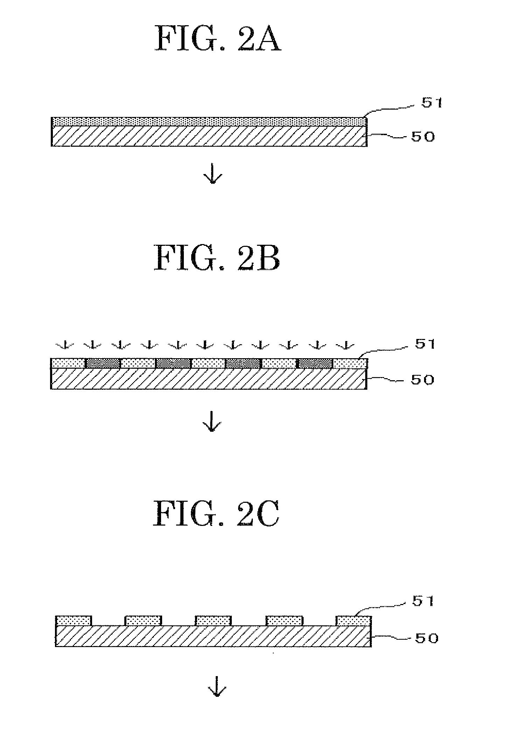

FIGs.2A to 2E are cross-sectional views of steps of producing a master plate used for forming a mold structure.

Firstly, as shown in FIG. 2A, a photoresist solution containing a novolac resin or the like is applied onto an Si master substrate 50 by spin coating or a similar technique, to thereby form a photoresist layer 51. The material for the photoresist layer may be a positive or negative resist.

As shown in FIG.2B, the resultant Si master substrate 50 is irradiated, while rotating the master substrate, with a laser beam (or an electron beam) that is modulated according to a data-recording track and servo information such that parts corresponding to each frame on tracks are exposed to light, whereby a predetermined pattern is formed on the entire surface of the photoresist layer.

As shown in FIG.2C, after the photoresist layer 51 is developed to remove the exposed portions, the remaining photoresist layer 51 forms a desired concave-convex pattern on the Si master substrate 50.

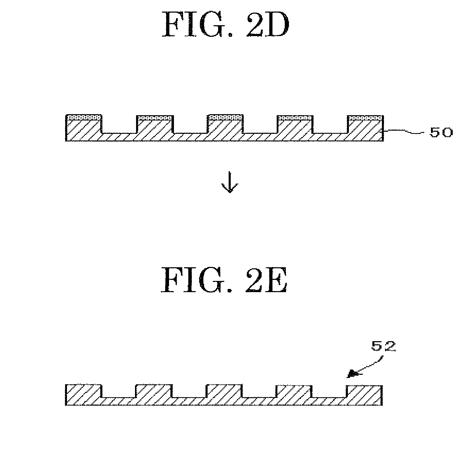

As shown in FIG.2D, the master substrate is selectively etched by RIE (Reactive Ion Etching) using, as a mask, the formed pattern of the photoresist layer 51, to thereby form a concavo-convex pattern in the master substrate 50.

As shown in FIG.2E, the remaining photoresist layer 51 was removed, to thereby form a master plate 52 having the concavo-convex pattern.

### - Production of mold structure -

The method for producing a mold structure using a master plate may employ plating, nanoimprinting or a similar technique.

The method for producing the mold structure by plating is described below.

Firstly, a conductive layer is formed on the surface of a master plate. Examples of the method which can be generally employed for forming the conductive layer include a vacuum film-forming method (e.g., sputtering and vapor deposition) and electroless plating. The material employed for forming the conductive layer may be a metal or an alloy containing at least one selected from Ni, Cr, W, Ta, Fe and Co. Of these, Ni, Co and FeCo alloys are preferred. A nonmetal material exhibiting conductivity (e.g., TiO) may also be used as the material of the conductive layer.

The thickness of the conductive layer is preferably 5 nm to 30 nm, more preferably 10 nm to 25 nm.

Onto the master plate having the conductive layer on the surface thereof, a metal material or an alloy material is deposited by plating until a deposited product has a predetermined thickness. The deposited product is separated from the master plate, whereby a mold structure is obtained. Examples of the material employed in plating for forming the mold structure include Ni, Cr and FeCo alloys, with an Ni-containing material being preferred. The thickness of the mold structure separated from the master plate is preferably 50 µm to 300 µm, more preferably 75 µm to 175 µm. When the thickness is less than 50 µm, the rigidity of the mold structure 1 is reduced, not ensuring sufficient mechanical properties. In addition, when a mold structure 1 having such a thickness is used in NIL at multiple times, the mold structure 1 itself is deformed, resulting in considerable deterioration in properties in practical use. When the thickness is more than 300 µm, the rigidity of the mold structure 1 becomes considerably high, failing to ensure firm contact between the mold structure 1 and the magnetic recording medium during magnetism transfer and NIL. In order to ensure the firm contact, a contact pressure therebetween must be increased, and thus, a fatal pattern defect may occur in the mold structure 1 and/or the magnetic recording medium when foreign matter enters therebetween.

Another mold structure may be replicated using the above-described mold structure as a master plate.

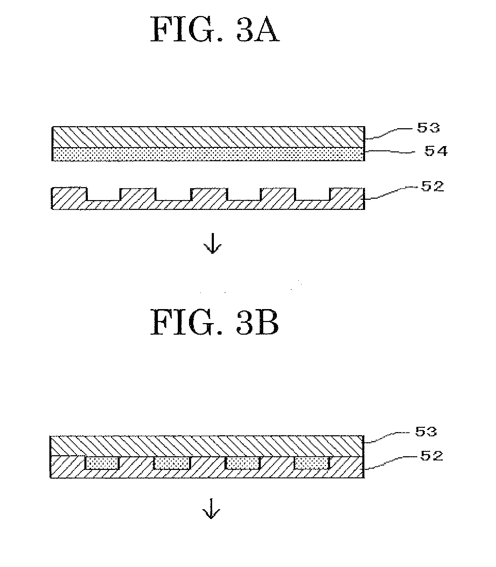

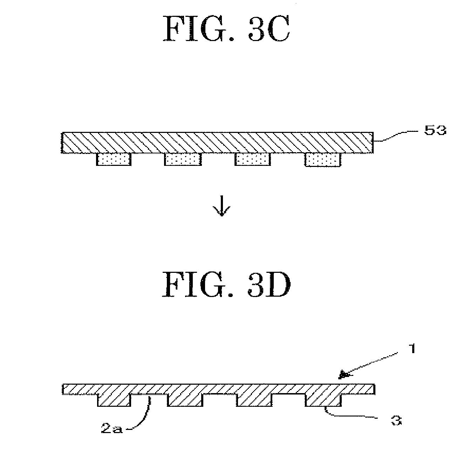

FIGs.3A to 3D are cross-sectional views of steps of producing the mold structure.

As shown in FIG. 3A, an imprint resist solution containing a photo-curable resin is applied onto one surface of a quartz substrate 53 (i.e., a substrate to be processed), to thereby form an imprint resist layer 54. Subsequently, the master plate 52 is pressed against the imprint resist layer 54, whereby a convex pattern of the master plate 52 is transferred to the imprint resist layer 54.

The material used for the substrate 53 to be processed is not particularly limited, so long as the material has optical transparency and has a strength to serve as a mold structure, and can be appropriately selected depending on the purpose. Examples of the material include quartz (SiO₂) and resins (PET, PEN, polycarbonate and low glass transition temperature fluorine resins).

As used herein, a material expressed by the expression "has (having) optical transparency" refers to those satisfying the following conditions: when a light beam is incident from one surface of the substrate 53 such that the light beam is emitted from the other surface on which the imprint resist layer 54 is formed, an imprint resist solution coated on this other surface is sufficiently cured; and the light transmittance of a light beam having a wavelength of 400 nm or less which is emitted from the one surface to the other surface of the substrate 53 is at least 50%.

A material expressed by the expression "has (having) a strength to serve as a mold structure" refers to those having such a strength that a mold structure made of the material can be separated from an imprint resist layer 13 without being damaged, when the mold structure is pressed against the imprint resist layer 13 formed on a magnetic recording medium base 12 at an average surface pressure of 1 kgf/cm² or more.

As shown in FIG.3B, the transferred pattern is cured by applying heat to the imprint resist layer 54, or by irradiating the imprint resist layer 54 with ultraviolet rays. When the pattern is cured by irradiation of ultraviolet rays, the irradiation may be carried out after patterning and after the mold structure is separated from the magnetic recording medium.

As shown in FIG.3C, the substrate 53 was selectively etched by RIE or the like using the cured pattern as a mask, thereby forming a concavo-convex pattern. Through the above procedure, a mold structure 1 is obtained.

Alternatively, an inorganic material is coated on a surface of a substrate, followed by formation of a resist mask. Subsequently, a mask of the inorganic material is formed using the resist mask. Thereafter, the substrate 53 may be etched using the inorganic material mask to form a mold structure 1.

A magnetic layer for transferring magnetism is formed on the surface of the mold structure 1 formed through the above procedure. Examples of the method for forming the magnetism-transferring magnetic layer include a vacuum film-forming method (e.g., sputtering or vapor deposition) and plating. Examples of the material used for the magnetism-transfering magnetic layer include a metal or an alloy containing at least one element selected from Fe, Co, Ni, Cr, Pt, B, W and Ta. Of these, FeCo alloys, FeCoNi alloys and the like having high saturation magnetization are particularly preferred.

The thickness of the magnetic layer is preferably 10 nm to 200 nm, more preferably 50 nm to 150 nm.

Alternatively, the mold structure 1 itself may be formed of a material used for the magnetism-transferring magnetic layer.

### - Formation of imprint resist layer -

As shown in FIG.6, an imprint resist layer 13 is formed on a magnetic recording medium base 12 having a base 10 and a magnetic layer 11 on a surface of the base 10 (preferably on both surfaces thereof).

### - Base -

The shape, structure, size and material of the base 10 are not particularly limited and can be appropriately selected depending on the purpose. For example, when a magnetic recording medium is a magnetic disc such as a hard disc, the base 10 has a shape of disc. The structure of the base 10 may have a single-layer or multi-layer structure. The material of the base 10 may be appropriately selected from those known as base materials for magnetic recording media, and examples thereof include aluminum, glass, silicon, quartz and SiO₂/Si in which a thermally-oxidized film is formed on a silicon surface. These materials may be used alone or in combination.

### - Magnetic layer -

The material used for a magnetic layer 11 is not particularly limited and can be appropriately selected from those known in the art depending on the purpose. Examples of preferred materials include Fe, Co, Ni, FeCo, FeNi, CoNi, CoNiP, FePt, CoPt and NiPt. These materials may be used alone or in combination.

The thickness of the magnetic layer 11 is not particularly limited and can be appropriately selected depending on the purpose. Generally, the thickness is about 5 nm to about 30 nm.

The method for forming the magnetic layer 11 is not particularly limited and can employ any known method. Examples of the method include sputtering and electrodeposition.

Furthermore, a crystal orientation layer for orienting a magnetic layer or a soft magnetic undercoat layer may be formed, as appropriate, between the base 10 and the magnetic layer 11. In particular, the soft magnetic undercoat layer may have a single layer or multi-layer structure.

### - Imprint resist layer -

The material of an imprint resist layer 13 is not particularly limited and can be appropriately selected from those known in the art depending on the purpose. For example, the layer may be formed by coating a surface of the magnetic recording medium base 12 with an imprint resist composition (hereinafter may be referred to as an "imprint resist solution") containing at least one of a thermosetting resin and a photo-curable resin. Preferably, the imprint resist composition for the imprint resist layer 13 contains a material which does not inhibit, in magnetism transfer, magnetic signal transfer from a mold structure 1 to a magnetic recording medium base 12 (described below). Specifically, the material has a relative magnetic permeability of 1 or more, and examples of the preferred material include novolac resins, epoxy resins, acrylic resins, organic glass resins and inorganic glass resins. In order to increase the relative magnetic permeability of the resist composition for improving performance of recording carried out by transferring magnetism, metal microparticles may be dispersed in the resist composition. Examples of the metal microparticles include those of a metal or an alloy containing at least one element selected from Fe, Co and Ni. For imparting etching resistance to the resist composition, a nonmagnetic element (e.g., Pt, In, Ru, O or N) may be incorporated thereinto.

In the present invention, the imprint resist layer may also be formed by a data area-resist layer forming unit described below.

### - Data area-resist layer forming unit and step -

The data area-resist layer forming unit is a unit for forming an imprint resist layer of an imprint resist composition only on a data area-magnetic layer of a magnetic recording medium base.

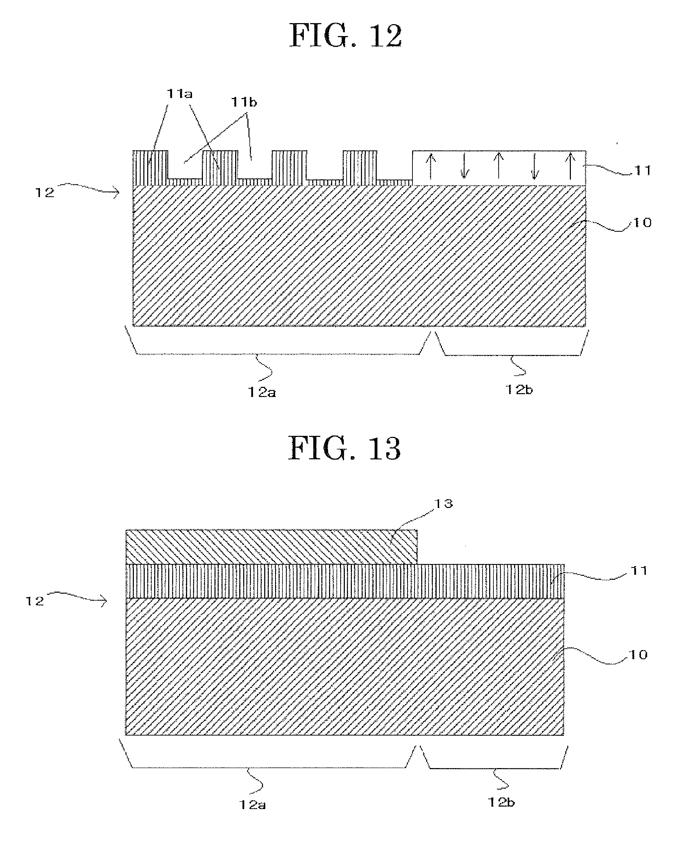

As shown in FIG.13, for forming an imprint resist layer 13 only in a data area 12a of a magnetic recording medium base 12, the aforementioned imprint resist solution may be applied only to a portion in the data area 12a of the magnetic recording medium base 12. Alternatively, the imprint resist solution may be applied not only to a portion in the data area 12a of the magnetic recording medium base 12 but also to a portion in a servo area 12b of the magnetic recording medium base 12, to thereby form an imprint resist layer on the entire surface of the magnetic recording medium base 12, and then only the imprint resist layer formed on the portion in the servo area 12b of the magnetic recording medium base 12 may be removed.

The data area-resist layer forming unit is not particularly limited and can employ any known coating method.

### - Formation of concavo-convex resist pattern -

There are two main methods for forming a concavo-convex resist pattern. One is thermal nanoimprint lithography (NIL), and the other is photo- nanoimprint lithography (NIL).

The thermal NIL is carried out through the following procedure.

In concavo-convex resist pattern forming, as shown in FIG.7, a concavo-convex pattern is formed by pressing a plurality of convex portions 3 of a mold structure 1 against an imprint resist layer 13 formed on a magnetic recording medium base 12. The temperature of the system is maintained in the vicinity of the glass transition temperature (Tg) of the imprint resist solution. After transfer of the pattern to the surface of the imprint resist layer, the temperature of the imprint resist layer 13 is controlled to be lower than the glass transition temperature of a thermoplastic resin contained in the imprint resist solution, whereby the imprint resist layer is cured. After separation of the mold structure 1 for imprinting, a concavo-convex pattern is formed in the imprint resist layer 13.

The photo-NIL is carried out as follows.

In photo-NIL, using a mold structure 1 formed of a material having optical transparency and a strength to serve as a mold structure (e.g., quartz (SiO₂) or organic resins (PET, PEN, polycarbonate and low glass transition temperature fluorine resins)), a concavo-convex pattern of the mold structure is transferred in an imprint resist layer 13 of an imprint resist composition containing at least a photo-curable resin.

The formed pattern is cured by irradiation with ultraviolet rays. Notably, the UV-irradiation may be carried out after patterning and after the mold structure 1 is separated from a magnetic recording medium base 12.

### <Imprinting and magnetic field applying unit and step>

The imprinting and magnetic field applying step is carried out by an imprinting and magnetic field applying unit. Specifically, this step includes transferring a concavo-convex pattern corresponding to concave and convex portions of a mold structure into an imprint resist layer (made of an imprint resist composition) formed on a magnetic layer of a magnetic recording medium base, by pressing the mold structure against the imprint resist layer; and transferring magnetism to a servo area by application of a magnetic field via the mold structure.

Preferably, the magnetic field is applied via the mold structure to a data area and the servo area. When a perpendicular magnetic recording medium is employed, the magnetic field is preferably applied via the mold structure to the servo area and the data area in a direction perpendicular to a surface of the magnetic recording medium.

Imprinting and magnetism transfer may be carried out at the same time. In other words, magnetism transfer may be carried out simultaneously with curing of the imprint resist layer. Alternatively, magnetism transfer may be carried out before or after imprinting. When magnetism transfer is carried out before imprinting, magnetism transfer is carried out before curing of the coated resist in a state where the mold structure and the resist-coated base firmly contact each other. When magnetism transfer is carried out before imprinting, magnetism transfer is carried out after curing of the coated resist in a state where the mold structure and the resist-coated base firmly contact each other.

The imprinting and magnetic field applying unit is not particularly limited, so long as the unit has the function of efficiently carrying out imprinting and magnetic transfer at one time (by a single unit), and can be appropriately selected according to the purpose. Examples of the unit include a device in which a conventional magnetic transfer device is combined with a pressing unit (having the pressurizing function) and, if necessary, with a heating unit, a cooling unit or a light-irradiating unit.

The pressing unit is not particularly limited and can be appropriately selected according to the purpose. Examples of the pressing method which the pressing unit employs include a usual mechanical pressure applying method employing, for example, a ball screw; a method by vacuuming a pressure applying chamber so that the difference in pressure is established; and a method by applying a highly-pressurized air by the mediation of an intermediate member.

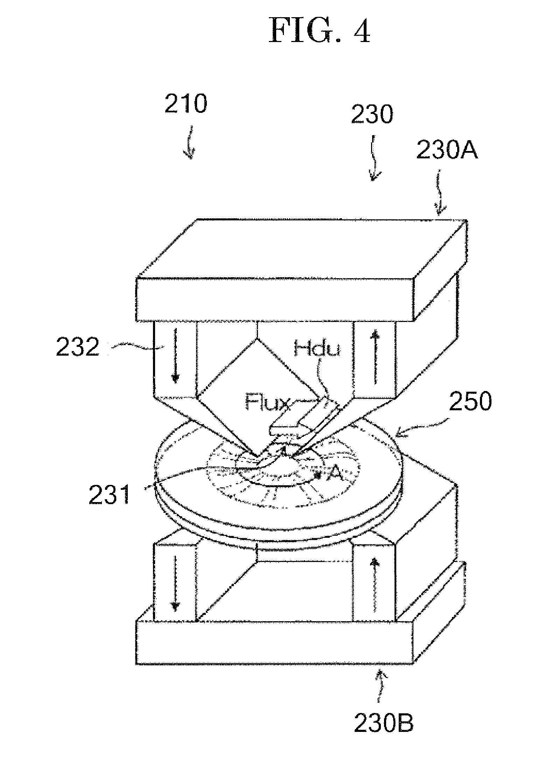

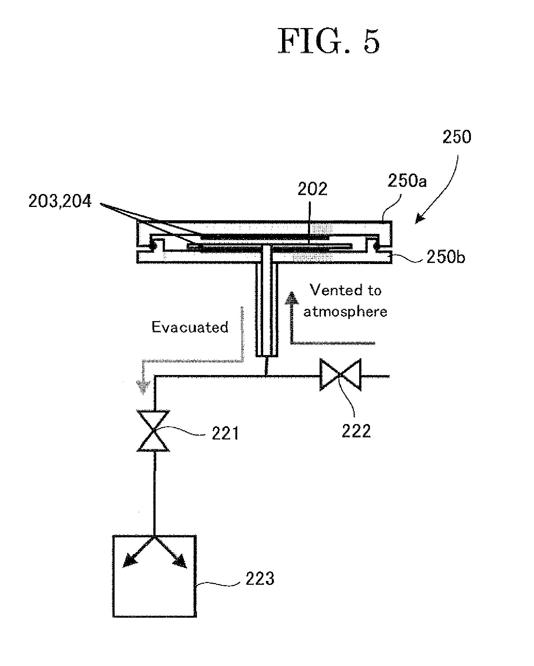

Specifically, an apparatus for manufacturing a magnetic recording medium of the present invention employs an imprinting and magnetic transfer apparatus shown in FIGs.4 and 5.

FIG.4 is a schematic perspective view of an imprinting and magnetic transfer apparatus of the present invention. FIG.5 is a schematic view of a pressing unit.

An imprinting and magnetic field applying unit 230 constitutes the imprinting and magnetic transfer apparatus 210 shown in FIG.4. The imprinting and magnetic field applying unit 230 includes a pressing unit (see FIG.5), an upper holder 250a, a lower holder 250b, magnets 230A and 230B, a pressure applying chamber (holder) 250 and a rotating unit (not shown), wherein the upper holder 250a and the lower holder 250b secure mold structures 203 and 204 on a magnetic recording medium 202 such that the recording medium is vertically pressed by the mold structures; the magnets 230A and 230B are disposed above the upper holder 250a and below the lower holder 250b, respectively; and the rotating unit supports the pressure applying chamber (holder) 250 and rotates the holder 250 in a direction indicated by arrow A (shown in FIG.4) with respect to the magnets 230A and 230B. Notably, a magnetic field applying mechanism may be rotated, while fixing the holder.

The imprinting and magnetic field applying unit includes different units depending on different imprinting methods employed. When the unit employs a thermal imprinting method, it includes at least a heating unit and a cooling unit, whereas when the unit employs a photo-imprinting method, it includes at least a light-irradiating unit. Notably, the unit may include the functions required for carrying out both the thermal imprinting method and the photo-imprinting method.

Through employment of the imprinting and magnetic transfer apparatus of the present invention, a concavo-convex pattern corresponding to concave and convex portions of a mold structure is transferred into an imprint resist layer in a magnetic recording medium. Specifically, as shown in FIG.5, a valve 221 of the pressing unit is closed and a valve 222 is opened, whereby a vacuum pump 223 is operated. After evacuation of the interior of the pressure applying chamber (holder) 250, the mold structures 203 and 204 are vertically pressed against the magnetic recording medium 202 provided between the upper holder 250a and the lower holder 250b.

Meanwhile, an electromagnet is used as the magnet 230A. As shown in FIG.4, the magnet 230A includes a core 232 and a coil (not shown) winding around the core 232, the core extending radially at least from the innermost track to the outermost track of the magnetic recording medium 202 and having heads forming a gap 231. The magnet 230B has the same configuration as the magnet 230A.

The imprinting and magnetic transfer apparatus is configured such that when a direct-current magnetic field is generated by applying electrical current to the coil, a holder 250 is rotated by the rotating unit (not shown), and information of the mold structures 203 and 204 is transferred to the entire track region of the magnetic recording medium 202. Notably, in addition to the electromagnet, a permanent magnet may be used as the magnets 230A and 230B. FIG.4 shows a device employed for applying a magnetic field in an in-plane (circumferential) direction. When a perpendicular magnetic recording medium is used, a device for applying a magnetic field in a perpendicular direction may be employed.

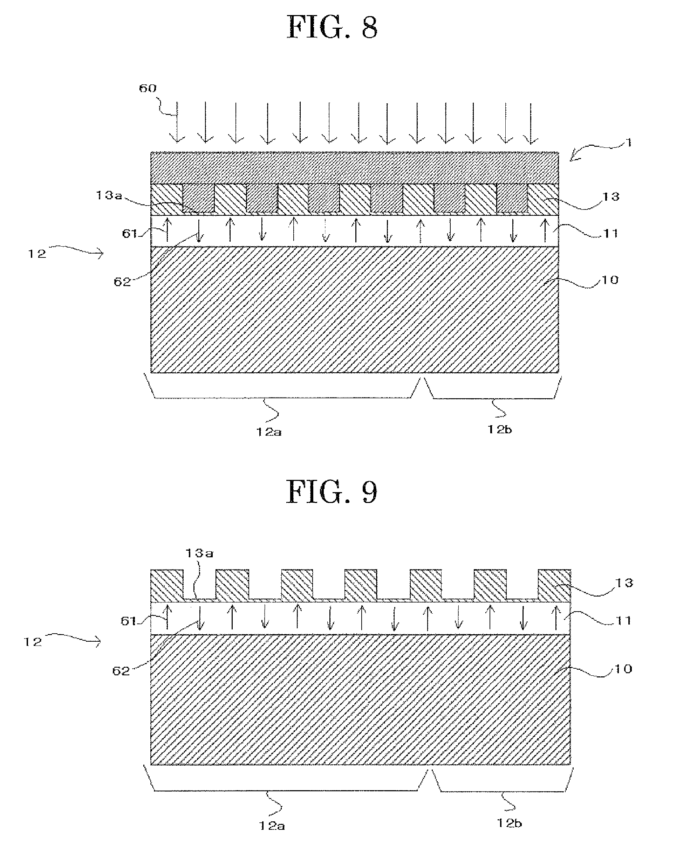

In transferring magnetism, an initialization magnetic field is applied in advance to a magnetic recording medium base 12 (slave disc) in a direction in which magnetic fluxes are applied perpendicularly to a surface of a base 10, whereby the surface is uniformly magnetized in one direction. Subsequently, a predetermined magnetic field 60 is applied to the initialized magnetic recording medium base 12 (slave disc) in the reverse direction to the initialization magnetic field via the mold structure 1 (FIG.8) for transferring magnetism to a magnetic layer 11 corresponding to a servo area 12b and a data area 12a so that magnetization 61 orients in a positive direction and magnetization 62 in an opposite direction. The predetermined magnetic field 60 is a transfer magnetic field in the opposite direction to the initialization magnetic field.

When the predetermined magnetic field 60 is applied to the mold structure 1 for imprinting, the magnetic fluxes are applied in a direction perpendicular to the surface of the base 10, whereby magnetization is established.

There are two methods for transferring magnetism using the mold structure 1 (master disc). In one method, the mold structure 1 (master disc) is pressed against one surface of a magnetic recording medium base 12 (slave disc) to transfer magnetism thereon (not shown). In the other method, a pair of mold structures 1 (master discs) is pressed against both surfaces of a magnetic recording medium base 12 (slave disc) to transfer magnetism thereon at one time.

Notably, the imprinting and magnetic transfer apparatus shown in FIG.4 includes the magnets 230A and 230B placed above and below the holder 250, in order to sandwich the magnetic recording medium 202 between the two mold structures and to transfer information of these master discs to both surfaces of the magnetic recording medium 202. However, when a single mold structure is used for transferring magnetic information to one of the upper and lower surfaces of the magnetic recording medium 202, only one magnet may be provided on one side of the holder 250.

As shown in FIG.4, the magnet 230A generates, in the gap 231 provided between the heads of the core 232, a magnetic field Hdu to be transferred to the magnetic recording medium 202. The magnetic field Hdu is along the track direction and in the reverse direction to the initialization magnetic field. The situation on the electromagnet 230B side is the same as described above.

Notably, the intensity of the magnetic field Hdu is preferably 0.6 to 1.3 times the coercive force Hc of a magnetic layer 202b or 202c formed on an upper or lower surface of the magnetic recording medium 202, more preferably 0.8 to 1.2 times, still more preferably 0.9 to 1.1 times.

The imprinting and magnetic field applying unit includes a heating unit and a cooling unit as described below, when the unit employs a thermal imprinting method.

### - Hating and cooling units -

The heating unit is for heating an imprint resist layer which is made of an imprint resist composition containing at least a thermoplastic resin and which is formed on the medium base of a magnetic recording medium, to a temperature in the vicinity of or higher than the glass transition temperature of the thermoplastic resin.

The heating unit is not particularly limited, so long as it attains uniform in-plane temperature distribution with respect to a mold structure and the medium base, and is capable of controlling the temperature thereof at high accuracy. The unit can be appropriately selected according to the purpose. Examples of the heating unit include a heater, an infrared irradiation device and an induction heating device. In addition to the imprint resist layer, a mold structure itself may be heated to a predetermined temperature.

The cooling unit is for cooling a pressed imprint resist layer formed after the mold structure is pressed against the imprint resist layer heated by the heating unit. The cooling unit may employ, for example, natural cooling through heat release; forced air cooling using a refrigerant (e.g., air); contact cooling using a heat sink; and electronic cooling using a Peltier device or a similar device.

The imprinting and magnetic field applying unit includes a light irradiating unit as described below, when the unit employs a photo-imprinting method.

### - Light irradiating unit and step -

The light irradiating unit is for curing the pressed imprint resist composition formed after the mold structure is pressed against the coated imprint resist composition which contains at least a photo-curable resin and which has been coated on the medium base of the magnetic recording medium. The light irradiating unit may employ, for example, a high-pressure UV lump, a low-pressure UV lump and a UV LED. Light irradiation carried out by this unit may be, in addition to direct irradiation which is generally employed, introduction of light using a fiber or the like. Alternatively, pulse irradiation may be employed.

An apparatus for manufacturing a magnetic recording medium of the present invention preferably includes a protective layer-forming unit as described below.

### <Protective layer-forming unit and step>

The protective layer-forming unit is for forming a protective layer in a magnetism-transferred servo area formed after a servo area of a magnetic recording medium is subjected to magnetism transfer.

The portion where a protective layer is formed is a portion corresponding to the servo area, regardless of the presence of a concavo-convex pattern in an imprint resist layer of the portion.

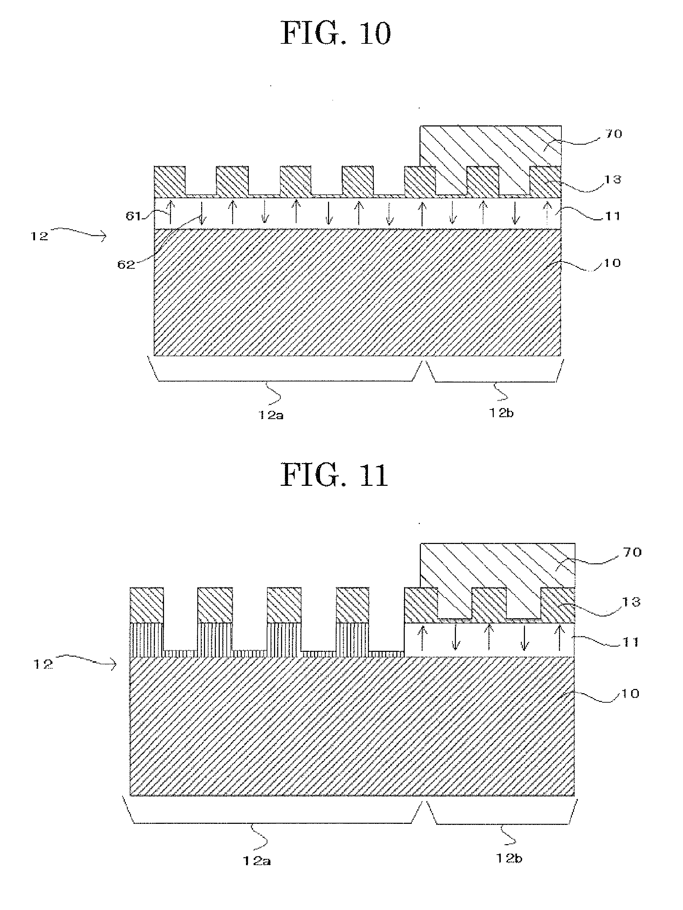

As shown in FIG. 10, a concavo-convex patterned resist formed on the imprint resist layer 13 corresponding to the servo area 12b is provided with a resist layer 70 (another resist layer) for protection. By virtue of the resist layer 70, removal or deterioration of a servo area magnetic layer, which would otherwise occur during processing of a data area magnetic layer, can be prevented.

The resist layer 70 is preferably made of at least one selected from novolac resins, epoxy resins, acrylic resins, organic glass resins and inorganic resins. These materials are the same as those for the imprint resist composition. There may be employed a material insoluble in a solvent which is used for forming the imprint resist composition.

Examples of the method for forming the protective layer include a peel coat method, a photolithographic method using a mask and an ink-jet method.

If necessary, the method of the present invention may further include other steps; e.g., a cleaning step, a coating step for coating a resist on a magnetic recording medium base, a curing step for reliably curing a resist layer after imprinting and magnetism transfer and a controlling step.

The cleaning step is for cleaning in advance a magnetic recording medium and is carried out by a cleaning unit. The cleaning unit may be, for example, a method using a magnetic head, a tape or the like.

The controlling step is carried out by a controlling unit. The unit controls operations of the units described above, positioning of a mold structure and a magnetic recording medium, pressure application and a curing mechanism. The controlling unit is not particularly limited and can be appropriately selected according to the purpose. Examples of the unit include a device such as a sequencer or a computer.

Referring now to the drawings, next will be described preferred embodiments of a method for manufacturing a magnetic recording medium using an apparatus of the present invention.

### <Fist embodiment>

With reference to FIGs.6 to 12, next will be described the method of a first embodiment using the apparatus of the present invention.

Firstly, as shown in FIG.6, a magnetic layer 11 is formed on a surface of a base 10 (preferably on both surfaces thereof), and then an imprint resist layer 13 is formed on the magnetic layer 11.

Subsequently, using an apparatus for manufacturing a magnetic recording medium (imprinting and magnetic transfer apparatus) shown in FIGs.4 and 5, a concavo-convex pattern is formed, as shown in FIG.7, by pressing a plurality of convex portions 3 of a mold structure 1 against an imprint resist layer 13 formed on the magnetic layer 11 of a magnetic recording medium base. The temperature of the system is maintained in the vicinity of the glass transition temperature (Tg) of an imprint resist solution. After transfer of the pattern to a surface of the imprint resist layer 13, the temperature of the layer is controlled to be lower than the glass transition temperature of the imprint resist solution for curing, whereby a concavo-convex pattern is formed in the imprint resist layer 13.

Subsequently, using the apparatus (imprinting and magnetic transfer apparatus) shown in FIGs.4 and 5, magnetism transfer is carried out, as shown in FIG.8, by applying a predetermined magnetic field 60 via the mold structure 1 so that magnetization 61 orients in a positive direction and magnetization 62 in an opposite direction in a magnetic layer 11 corresponding to a servo area 12b and a data area 12a. When the mold structure 1 for imprinting is exposed to the predetermined magnetic field 60, magnetic fluxes are applied in a direction perpendicular to the surface of the base 10, whereby magnetizations 61 and 62 are established. The predetermined magnetic field 60 includes an initialization magnetic field and a transfer magnetic field which is in the opposite direction to the initialization magnetic field.

After completion of magnetism transfer, the mold structure is separated from the imprint resist layer, whereby a concavo-convex pattern is formed in the imprint resist layer 13 and magnetism is recorded in the magnetic layer 11 as shown in FIG.9.

As shown in FIG. 10, the concavo-convex resist pattern formed in the imprint resist layer 13 corresponding to the servo area 12b is provided with a resist layer 70. Examples of the method for forming the protective layer include a peel coat method, a photolithographic method using a mask and an ink-jet method.

Examples of the material used for the resist layer 70 include novolac resins, epoxy resins, acrylic resins, organic glass resins and inorganic resins. These materials are the same as those for the imprint resist composition. There may be employed a material insoluble in a solvent which is used for forming the imprint resist composition.

As shown in FIG.11, using the resist layer 70 formed in the servo area 12b as a mask, a concavo-convex pattern is formed in the magnetic layer 11 of the data area 12a, on the basis of the concavo-convex resist pattern formed in the imprint resist layer 13 of the data area 12a. Examples of the technique which can be employed for forming the convexo-concave pattern include ion beam etching, RIE and wet etching. When ion beam etching is carried out, an Ar gas may be used as a process gas, whereas when RIE is carried out, CO plus NH₃, a chlorine gas and the like may be used as an etchant.

Since a part of the magnetic layer corresponding to the data area 12a is removed by etching in patterning of the magnetic layer, magnetism transferred into the data area 12a (magnetizations 61 and 62) disappears or attenuates.

As shown in FIG.12, there is removed the imprint resist layer 13 on convex portions 11a of the magnetic layer 11. Examples of the method for removing the layer include a permeation method using a solvent capable of dissolving a resist, and a reactive ion etching method. When the permeation method is employed, application of an ultrasonic wave may be carried out for promoting resist removal.

If necessary, the method of the present invention may includes, for example, a step of embedding a nonmagnetic material (e.g., SiO₂, carbon, alumina; a polymer such as polymethylmethacrylate (PMMA) or polystyrene (PS); or a smooth oil) in concave portions 11b of the magnetic layer; a step of smoothing the surface of the magnetic layer; a step of forming on the smoothed surface a protective layer made of DLC (diamond-like carbon) or the like; and a step of applying a lubricant after the other steps.

### <Second embodiment>

With reference to FIGs.13 to 19, next will be described the method of a second embodiment using the apparatus of the present invention.

Firstly, as shown in FIG.13, a magnetic layer 11 is formed on a surface of a base 10 (preferably on both surfaces thereof), and then an imprint resist layer 13 is formed only a portion of magnetic layer corresponding to a data area 12a.

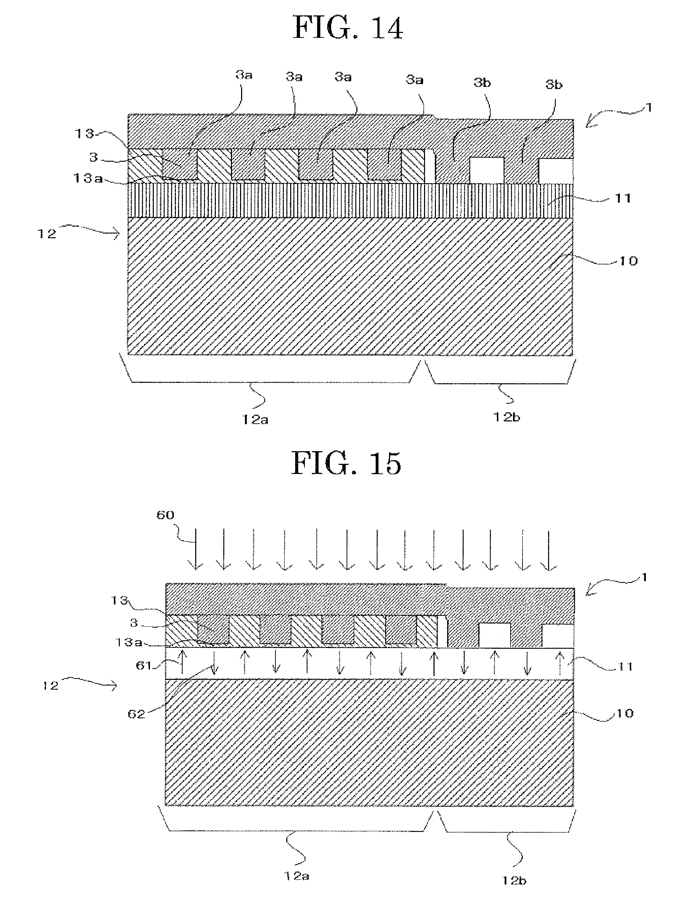

Using an apparatus for manufacturing a magnetic recording medium (imprinting and magnetic transfer apparatus) shown in FIGs.4 and 5, a concavo-convex pattern was formed, as shown in FIG.14, by pressing a plurality of convex portions 3 (data pattern convex portions 3a) of a mold structure 1 against the imprint resist layer 13 formed only on a portion of a magnetic recording medium base 12 corresponding to a data area 12a.

Subsequently, using an apparatus for manufacturing a magnetic recording medium (imprinting and magnetic transfer apparatus) shown in FIGs.4 and 5, magnetism transfer is carried out, as shown in FIG.15, by applying a predetermined magnetic field 60 via the mold structure 1 so that magnetization 61 orients in a positive direction and magnetization 62 in an opposite direction in a magnetic layer 11 corresponding to a servo area 12b and a data area 12a. When the mold structure 1 for imprinting is exposed to the predetermined magnetic field 60, magnetic fluxes are applied in a direction perpendicular to the surface of the base 10, whereby magnetizations 61 and 62 are established in this direction. The predetermined magnetic field 60 includes an initialization magnetic field and a transfer magnetic field which is in the opposite direction to the initialization magnetic field.

In magnetism transfer, a predetermined magnetic field 60 is applied in a state where servo pattern convex portions 3b firmly contact a portion of the magnetic layer 11 corresponding to a servo area 12b, and thus, magnetism is reliably transferred to the portion of the magnetic layer.

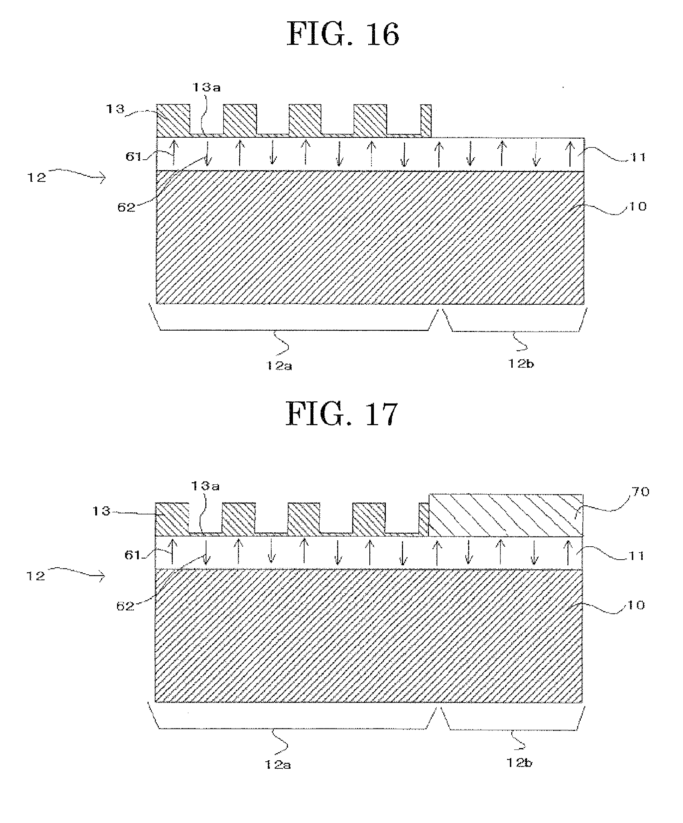

After completion of magnetism transfer, the mold structure is separated from the imprint resist layer, whereby a concavo-convex pattern is formed in the imprint resist layer 13 and magnetism is recorded in the magnetic layer 11 as shown in FIG.16.

As shown in FIG.17, a magnetic layer 11 corresponding to a servo area 12b is provided with a resist layer 70. Examples of the method for forming a protective layer include a peel coat method, a photolithographic method using a mask and an ink-jet method.

Examples of the material used for the resist layer 70 include novolac resins, epoxy resins, acrylic resins, organic glass resins and inorganic resins. These materials are the same as those for the imprint resist composition. There may be employed a material insoluble in a solvent which is used for forming the imprint resist composition.

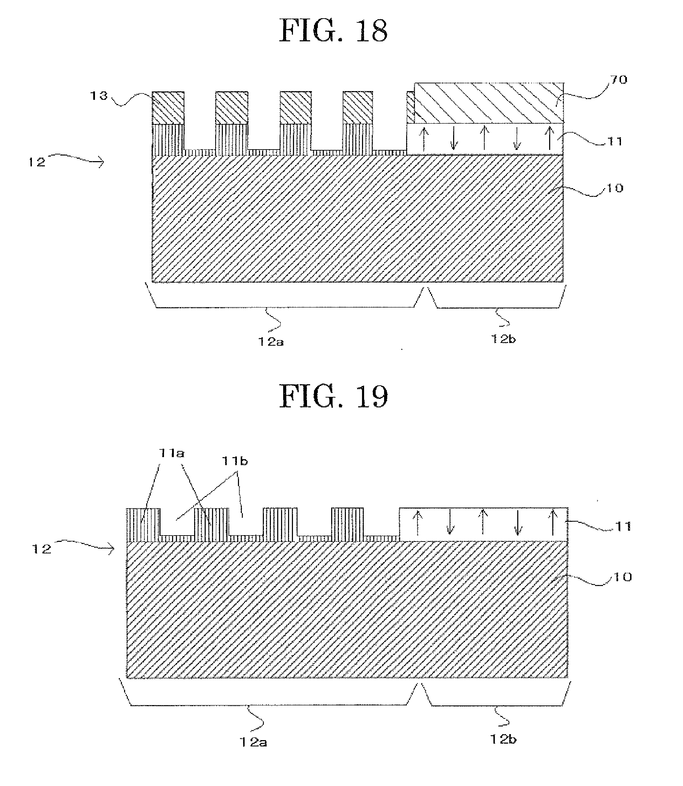

As shown in FIG.18, using, as a mask, the resist layer 70 formed on the magnetic layer 11 corresponding to the servo area 12b, a concavo-convex pattern is formed in the magnetic layer 11 of the data area 12a, on the basis of the concavo-convex resist pattern formed in the imprint resist layer 13 of the data area 12a. Examples of the technique which can be employed for forming the convexo-concave pattern include ion beam etching, RIE and wet etching. When ion beam etching is carried out, an Ar gas may be used as a process gas, whereas when RIE is carried out, CO plus NH₃, a chlorine gas and the like may be used as an etchant.

Since a part of the magnetic layer corresponding to the data area 12a is removed by etching in patterning of the magnetic layer, magnetism transferred to the data area 12a (magnetizations 61 and 62) disappears or attenuates.

As shown in FIG.19, there is removed the imprint resist layer 13 on convex portions 11a of the magnetic layer 11. Examples of the method for removing the layer include a permeation method using a solvent capable of dissolving a resist and a reactive ion etching method. When the permeation method is employed, an ultrasonic wave may be applied to the imprint resist layer 13 for promoting resist removal.

If necessary, a method for manufacturing a magnetic recording medium of the present invention may includes, for example, a step of embedding a nonmagnetic material (e.g., SiO₂, carbon, alumina,; a polymer such as polymethylmethacrylate (PMMA) or polystyrene (PS); or a smooth oil) in concave portions 11b of the magnetic layer; a step of smoothing the surface of the magnetic layer; a step of forming on the smoothed surface a protective layer made of DLC (diamond-like carbon) or the like; and a step of applying a lubricant after the other steps.

In a magnetic recording medium manufactured by an apparatus for manufacturing a recording medium of the present invention, as shown in FIGs.12 and 19, servo signals in a servo area 12b consist of magnetization 61 that is oriented in a positive direction and magnetization 62 that is oriented in an opposite direction. In addition, the value 3σ of the widths of convex portions of a concavo-convex patterned magnetic layer formed in a data area 12a is 15 nm or less.

Furthermore, a magnetic recording medium manufactured by a method for manufacturing a magnetic recording medium of the present invention is preferably at least any one of a discrete magnetic recording medium and a patterned magnetic recording medium.

### EXAMPLES

The present invention will next be described by way of examples, which should not be construed as limiting the present invention thereto.

### (Example 1)

### <Production of mold structure>

### - Production of master plate -

An electron beam resist was applied onto an 8-inch Si wafer by spin coating so as to attain a thickness of 100 nm. The formed resist layer was subjected to patternwise light exposure using a rotary electron beam exposing device, followed by developing, to thereby produce an Si base having a desired convexo-concave resist pattern. The Si base was subjected to a reactive ion etching treatment using the convexo-concave resist pattern as a mask, to thereby form a convexo-coneave patterned Si base. A resist remaining on the Si base was removed by washing with a solvent capable of dissolving the resist, followed by drying, whereby a master plate was obtained.

The pattern used is generally classified into a region for a data area and a region for a servo area. The region for the data area has a convex width of 90 nm and a concave width of 30 nm (TP=120 nm). The region for the servo area has a basic signal length of 80 nm, a total sector number of 120, a preamble area (40 bit), a servo mark area (6 bit), a Sector Code area (8 bit), a Cylinder Code area (32 bit) and a burst area (Burst pattern). The identification code of the servo mark area is "001010", and the Sector Code area is binary. For the Cylinder Code area, Gray conversion is used. For the burst area, commonly used 4 bursts (each burst is 16 bit) and Manchester conversion are used.

### - Production of mold structure intermediate by plating -

Over a surface of the master plate, an Ni conductive film of 20 nm in thickness was formed by sputtering. The resultant master plate having the conductive film was immersed in a nickel sulfamate bath, to thereby form an Ni film of 200 µm in thickness by electrolytic plating. The formed Ni film was separated from the master plate made of Si, followed by washing, whereby a mold structure intermediate was obtained.

### - Method for forming magnetism-transfer magnetic layer -

A magnetic layer (FeCo: 30 atom%) of 100 nm in thickness was formed on a surface of the mold structure intermediate by sputtering, to thereby produce a mold structure.

### <Production of perpendicular magnetic recording medium>

There was manufactured a perpendicular magnetic recording medium including a 2.5-inch glass base; and, on the glass base, at least a soft magnetic layer, a first nonmagnetic orientation layer, a second nonmagnetic orientation layer, a magnetic recording layer (magnetic layer), a protective layer and a lubricant layer, these layers being successively stacked. The soft magnetic layer, the first nonmagnetic orientation layer, the second nonmagnetic orientation layer, the magnetic recording layer and the protective layer were formed by sputtering, whereas the lubricant layer was formed by a dipping method. The procedure for producing the perpendicular magnetic recording medium is as follows.

The soft magnetic layer was formed from CoZrNb. Specifically, the glass base was set so as to face a CoZrNb target, while injecting an Ar gas such that the gas pressure was adjusted to 0.6 Pa, and a CoZrNb film (thickness: 100 nm) serving as the soft magnetic layer was formed on the glass base at 1,500 W (DC).

The first and second nonmagnetic orientation layers were formed from Ti and Ru, respectively. Specifically, the CoZrNb film-formed glass base was set so as to face a Ti target, while injecting an Ar gas such that the gas pressure was adjusted to 0.5 Pa, and a Ti seed layer (thickness: 5 nm) was formed on the CoZrNb film with a DC discharge (1,000 W). Thereafter, the first nonmagnetic orientation layer-formed base was set so as to face a Ru target, while injecting an Ar gas such that the gas pressure was adjusted to 0.5 Pa, and a Ru film (thickness: 10 nm) serving as the second nonmagnetic orientation layer was formed on the first nonmagnetic orientation layer with a DC discharge (1,000 W).

The magnetic recording layer was formed from CoCrPtO. Specifically, the second nonmagnetic orientation layer-formed base was set so as to face a CoPtCr target, while injecting an Ar gas containing O₂ (0.04%) such that the gas pressure was adjusted to 18 Pa, and the magnetic recording layer (thickness: 15 nm) was formed on the second nonmagnetic orientation layer with a DC discharge (290 W). A protective layer is formed using C on the magnetic recording layer. Specifically, the magnetic recording layer-formed base was set so as to face a C target, while injecting an Ar gas such that the gas pressure was adjusted to 0.5 Pa, and a C-protective layer (thickness: 4 nm) was formed on the magnetic recording layer with a DC discharge (1,000 W). The coercive force of the formed perpendicular magnetic recording medium was found to be 334 kA/m (4.2 kOe).

### Nanoimprinting, magnetism transfer, and patterning of magnetic layer -

Before nanoimprinting, the above-obtained perpendicular magnetic recording medium was initialized using the apparatus (imprinting and magnetic transfer apparatus) shown in FIGs.4 and 5. Subsequently, a novolac resist (mr-17000E, product of Microresist company) was applied onto a surface of the perpendicular magnetic recording medium by spin coating (3,600 rpm) so as to attain a thickness of 100 nm.

The above-obtained mold structure was set so as to face the resist-coated perpendicular magnetic recording medium, and this recording medium was heated at 100°C. The mold structure was pressed against this medium at a pressure of 3 MPa for 10 sec so that the mold structure and the recording medium firmly contact each other, followed by application of a magnetic field for magnetism transfer. The magnetic intensity used for the magnetism transfer was 4.2 kOe. After completion of magnetic field application, the mold structure was separated from the perpendicular magnetic recording medium.

To a resist layer in a servo area 12b, SU-8 (product of MicroChem Corp.) serving as another resist layer (resist layer 70 in FIG.10) was bonded by a peel coat method.

After separation of the mold structure from the perpendicular magnetic recording medium, a resist remaining in an imprinted region of the recording medium was removed by O₂ RIE.

After resist removal, a magnetic layer in the perpendicular magnetic recording medium was processed so as to have a convexo-concave pattern. The method for forming the pattern employed ion beam etching using an Ar gas. After formation of a convexo-concave pattern of the magnetic layer, a remaining resist was removed by O₂ RIE. Thereafter, a PFPE lubricant was applied by a dipping method so as to attain a thickness of 2 nm. Through the above procedure, a magnetic recording medium of Example 1 was manufactured.

### (Example 2)

In a manner similar to that employed in Example 1, a mold structure and a magnetic recording medium were manufactured. Nanoimprinting, magnetism transfer and patterning were carried out using the mold structure and the recording medium through the following procedure.

### - Nanoimprinting, magnetism transfer, and patterning of magnetic layer -

Before nanoimprinting, the above-obtained perpendicular magnetic recording medium was initialized using the apparatus (imprinting and magnetic transfer apparatus) shown in FIGs.4 and 5. Subsequently, a novolac resist (mr--I7000E, product of Microresist company) was applied onto a surface of the perpendicular magnetic recording medium by spin coating (3,600 rpm) so as to attain a thickness of 100 nm. An epoxy resist (product of MicroChem Corp. SU-8-2) was applied onto the novolac resist layer by spin coating (3,600 rpm) so as to attain a thickness of 10 nm.

Using as a mask a Cr film that had been applied on areas corresponding to sectors of servo signals (which film had been removed from areas corresponding to data areas), the recording medium that had been coated with the resists was exposed to ultraviolet rays, followed by developing. The epoxy resist is of negative type, and thus remains on areas other than servo frames (i.e., exposed areas). The recording medium with the resists remaining on the areas other than the servo frames was immersed in acetone for 20 seconds, to thereby remove the novolac resist (mr-I7000E, product of Microresist company) remaining on the servo areas.

The above-obtained mold structure was set so as to face the resist-coated perpendicular magnetic recording medium, and this recording medium was heated at 110°C. The mold structure was pressed against this medium at a pressure of 1.5 MPa for 30 sec so that the mold structure and the recording medium firmly contact each other, followed by application of a magnetic field for magnetism transfer. The magnetic intensity used for the magnetism transfer was 4.6 kOe. After completion of magnetic field application, the mold structure was separated from the perpendicular magnetic recording medium.

To a resist layer in a servo area 12b, SU-8 (product of MicroChem Corp.) serving as another resist layer (resist layer 70 in FIG.17) was bonded by a peel coat method.

After separation of the mold structure from the perpendicular magnetic recording medium, a resist remaining in an imprinted region of the recording medium was removed by O₂ RIE.

After resist removal, a magnetic layer in the perpendicular magnetic recording medium was processed so as to have a convexo-concave pattern. The method for forming the pattern employed ion beam etching using an Ar gas. After formation of a convexo-concave pattern of the magnetic layer, a remaining resist was removed by O₂ RIE. Thereafter, application of a PFPE lubricant was carried out by a dipping method so as to attain a thickness of 2 nm. Through the above procedure, a magnetic recording medium of Example 2 was manufactured.

An apparatus for manufacturing a magnetic recording medium of the present invention carries out, by an imprinting and magnetic field applying unit, magnetism transfer for recording servo signals for a magnetic recording medium and nanoimprinting for efficiently forming a concavo-convex pattern in a data area. The apparatus of the present invention realizes a reliable and efficient manufacturing of a magnetic recording medium having excellent signal integrity in a servo area, and is suitably employed for manufacturing a high-performance next-generation magnetic recording medium.

## Claims

1. An apparatus for manufacturing a magnetic recording medium comprising:
a mold structure formed of a disc-shaped substrate having on a surface thereof a concavo-convex pattern having convex portions which correspond to a servo area and a data area of a magnetic recording medium; and,
an imprinting and magnetic field applying unit which transfers a concavo-convex pattern on the basis of the concavo-convex pattern of the mold structure into an imprint resist layer that is made of an imprint resist composition and that is formed on a magnetic layer of a magnetic recording medium base by pressing the mold structure against the imprint resist layer, and which transfers magnetism to the servo area by application of a magnetic field via the mold structure.

2. The apparatus for manufacturing a magnetic recording medium according to claim 1, wherein the magnetic field is applied to the servo area and the data area via the mold structure.

3. The apparatus for manufacturing a magnetic recording medium according to claim 2, wherein the magnetic field is applied to the servo area and the data area via the mold structure in a direction perpendicular to a surface of the magnetic recording medium.

4. The apparatus for manufacturing a magnetic recording medium according to any one of claims 1 to 3, wherein the apparatus further comprises a data-area resist layer forming unit which forms the imprint resist layer made of the imprint resist composition only on the data area of the magnetic recording medium.

5. The apparatus for manufacturing a magnetic recording medium according to any one of claims 1 to 4, wherein the apparatus further comprises a protective layer-forming unit which forms a protective layer in the servo area of the magnetic recording medium which servo area has undergone magnetism transfer.

6. The apparatus for manufacturing a magnetic recording medium according to any one of claims 1 to 5, wherein the apparatus further comprises a heating unit for heating the imprint resist layer which is made of the imprint resist composition and which is formed on the magnetic layer of the magnetic recording medium base; and a cooling unit for cooling an imprint resist layer formed after the mold structure is pressed against a heated imprint resist layer.

7. The apparatus for manufacturing a magnetic recording medium according to claim 6, wherein the heating unit heats the imprint resist layer to a temperature equal to or higher than a glass transition temperature of a thermoplastic resin contained in the imprint resist composition.

8. The apparatus for manufacturing a magnetic recording medium according to any one of claims 1 to 5, wherein the apparatus further comprises a light-irradiating unit for curing an imprint resist composition by light irradiation which is formed after the mold structure is pressed against the imprint resist composition coated on the magnetic layer of the magnetic recording medium base.

9. The apparatus for manufacturing a magnetic recording medium according to claim 8, wherein the imprint resist composition contains a photo-curable resin.

10. A method for manufacturing a magnetic recording medium comprising:
an imprinting and magnetic field applying step which uses a mold structure formed of a disc-shaped substrate having on a surface thereof a concave-convex pattern having convex portions which correspond to a servo area and a data area of a magnetic recording medium; which transfers a concavo-convex pattern on the basis of the concavo-convex pattern of the mold structure into an imprint resist layer that is made of an imprint resist composition and that is formed on a magnetic layer of a magnetic recording medium base by pressing the mold structure against the imprint resist layer; and which transfers magnetism to the servo area by application of a magnetic field via the mold structure.
